# EUROPÄISCHE PATENTSCHRIFT

(11) **EP 0 599 034 B1**
(45) Veröffentlichungstag und Bekanntmachung des Hinweises auf die Patenterteilung: **29.01.1997**
(21) Anmeldenummer: 93116180.6
(22) Anmeldetag: 06.10.1993
(51) Int. Cl.: B01D 25/172

(54) **Aufhänge- und Führungsvorrichtung für die Filterplatten einer Filterpresse**
Suspension and guide apparatus for the filterplates of a filterpress
Dispositif de suspension et de guidage pour les plaques filtrantes d'un filtre-presse

(30) Priorität: 19.11.1992 DE 4239005
(43) Veröffentlichungstag der Anmeldung: 01.06.1994
(73) Patentinhaber: PASSAVANT-WERKE AG, D-65322 Aarbergen 7 (DE)
(72) Erfinder: Fresenius, Jürgen, Dipl.-Ing., D-65307 Bad Schwalbach (DE); Gebhardt, Fritz, D-65594 Runkel (DE)
(74) Vertreter: Glawe, Delfs, Moll & Partner

(56) Entgegenhaltungen:
- EP-A- 0 234 506
- DE-A- 2 920 385
- DE-B- 1 144 689
- GB-A- 424 502

## Beschreibung

Die Erfindung betrifft eine Aufhänge- und Führungsvorrichtung für die Filterplatten einer Filterpresse, mit zwei parallelen Schienen und auf diesen auf Rollen verfahrbaren Laufwagen, an denen die Filterplatten aufgehängt sind, wobei jeder Laufwagen je eine auf jeder Schiene laufende Rolle sowie mittig zwischen diesen ein Eingriffselement für den Eingriff einer den Wagen in Öffnungsrichtung der Filterpresse entlang den Schienen bewegenden Transporteinrichtung aufweist, und wobei die beiden Rollen jedes Laufwagens in Längsrichtung der Schienen gegeneinander versetzt angeordnet sind. Eine Vorrichtung dieser Art ist z.B. aus DE-A-36 06 301 bekannt.

Da die Filterplatten zu einem Paket zusammengeschoben werden müssen, müssen auch die Laufwagen so ausgebildet sein, daß sie im zusammengeschobenen Zustand nicht mehr Raum in Längsrichtung der Schienen beanspruchen als der Dicke der Filterplatten entspricht. Aus Platzgründen kann deshalb jeder Laufwagen nur eine Rolle auf jeder Schiene aufweisen.

Werden diese Rollen koaxial angeordnet, dann kann der Laufwagen und mit ihm die Filterplatte im wesentlichen ungedämpft um die Achse der Rollen pendeln. Um einen solches Pendeln nach Möglichkeit zu verhindern, sind die beiden Rollen jedes Laufwagens in Schienenlängsrichtung gegeneinander versetzt, so daß das Gewicht der senkrecht hängenden Filterplatte bereits ein den Pendelschwingungen entgegenwirkendes Drehmoment bezüglich jeder Rolle erzeugt.

Beim Öffnen der Filterpresse werden die Laufwagen nacheinander von der Transportvorrichtung erfaßt und zusammen mit den an ihnen hängenden Filterplatten in Öffnungsrichtung beschleunigt, wobei die Trägheitskraft der Filterplatte und die Haftung der Filterplatte am Filterkuchen überwunden werden muß. Die Resultierende dieser Kräfte erzeugt ein Drehmoment um die in Bewegungsrichtung vordere Rolle, welches die nachlaufende Rolle nach oben von der Schiene abzuheben sucht. Eine gewisse Abhebebewegung der nachlaufenden Rolle von der Schiene, was einem gewissen Zurückbleiben der Filterplatte gegenüber dem Laufwagen entspricht, ist erwünscht, weil dadurch die Beschleunigung der Filterplatte sanfter einsetzt und zu hohe Beschleunigungskräfte, die den Laufwagen und seine Verbindung zur Filterplatte zu stark beanspruchen, vermieden werden. Vorschläge, durch oberhalb der Rollen angeordnete Zwangsführungsschienen das Abheben der Rollen von ihren Schienen ganz zu unterbinden, haben sich deshalb als unzweckmäßig erwiesen.

Es wurde jedoch gefunden, daß im Betrieb derartiger Filterpressen Betriebsstörungen auftreten, die darin bestehen, daß die Laufwagen beim Öffnen der Filterpresse "entgleisen", d.h. bezüglich der Schienen verkanten und dann nicht mehr einwandfrei auf den Schienen bis in die Öffnungsstellung weiter rollen. Solche verkanteten Laufwagen werden trotzdem von der Transportvorrichtung bis zur Öffnungsposition gezogen, was einen erhöhten Verschleiß und sogar Beschädigungen der Vorrichtung zur Folge haben kann, und sie müssen anschließend von einer Bedienungsperson von Hand wieder ordnungsgemäß auf die Schienen aufgesetzt werden, was je nach dem Gewicht der Filterplatten ein anstrengender Vorgang ist und vor allem mit der Forderung nach einem volllautomatischen Betrieb der Filterpresse nicht vereinbar ist.

Der Erfindung liegt die Aufgabe zugrunde, eine Vorrichtung der genannten Art so auszubilden, daß das Entgleisen der Laufwagen beim Öffnen der Filterpresse vermieden wird.

Gemäß einer ersten erfindungsgemäßen Lösung wird dies dadurch erreicht, daß neben der Schiene, auf der die in Öffnungsrichtung nachlaufenden Rollen der Laufwagen laufen, eine der Außenseite der Rolle berührend oder mit geringem Spalt gegenüberstehende Führungsleiste vorgesehen ist, deren Höhe größer ist als die durch Plattenhaftung verursachten Abhebebewegungen der Rolle nach oben. Die Führungsleiste besteht vorzugsweise aus einem reibungsarmen Material, wie z.B. Kunststoff.

Gemäß einer anderen erfindungsgemäßen Lösung weist die in Öffnungsrichtung nachlaufende Rolle an ihrer Innenseite einen Spurkranz auf, dessen Höhe größer ist als die durch Plattenhaftung verursachten Abhebebewegungen der Rolle nach oben.

Eine Ausführungsform der Erfindung wird anhand der Zeichnungen näher erläutert. Es zeigt :
- Fig. 1: die Aufhänge- und Führungsvorrichtung in Ansicht, teilweise im Schnitt, quer zur Transportrichtung;
- Fig. 2: eine Seitenansicht eines Laufwagens;
- Fig. 3: eine Draufsicht auf den Laufwagen von Fig. 2.

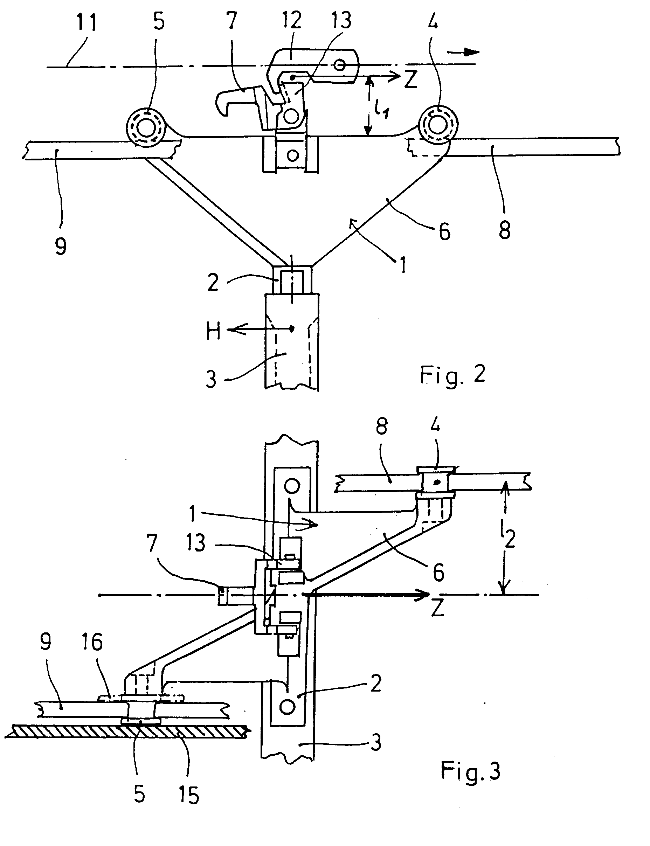

Der insbesondere in Fig. 2 und 3 dargestellte Laufwagen 1 ist über eine Fußleiste 2 mit einer Filterplatte 3 verbunden, von der nur der obere Bereich dargestellt ist. Der obere Teil jedes Laufwagens 1 ist als eine im Winkel zur Ebene der Filterplatte angeordnete Schrägplatte 6 ausgebildet, die an ihren Enden je ein Lager für eine Rolle 4 bzw. 5 aufweist, mit denen der Laufwagen 1 auf zwei Schienen 8, 9 rollen kann. Durch diese spezielle Gestaltung der Laufwagen 1 wird erreicht, daß die Laufwagen benachbarter Filterplatten so eng zusammengeschoben werden können, wie es der Dicke der Filterplatten 3 entspricht, obwohl die Rollen 4, 5, aus den eingangs genannten Gründen, um ein erheblich größeres Maß in Längsrichtung der Schienen 8, 9 gegeneinander versetzt sind.

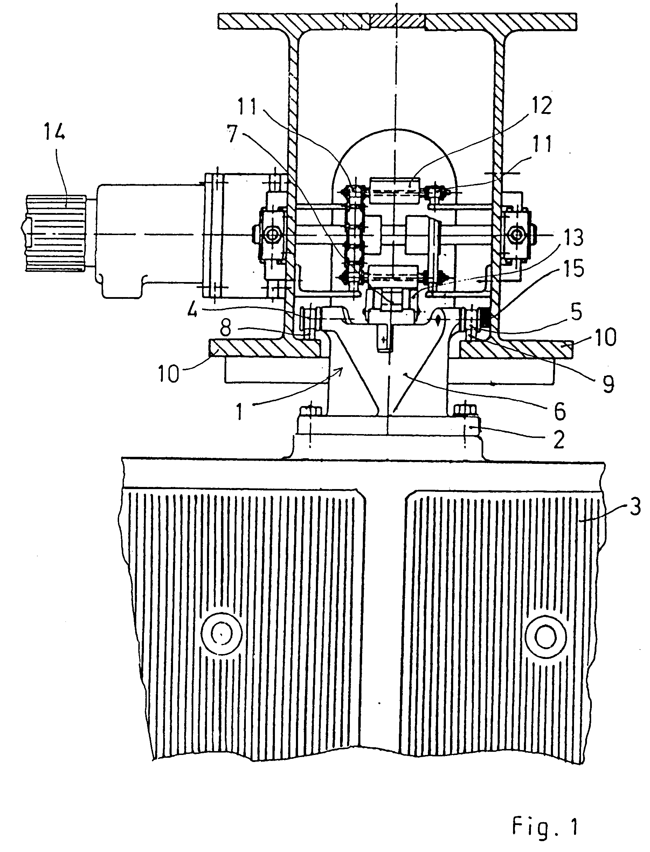

Wie man aus Fig. 1 erkennt, sind die Schienen 8, 9 von einem Tragprofil 10 abgestützt. Dieses umschließt auch den Transportmechanismus zum Bewegen der Laufwagen mit den Filterplatten. Dieser Transportmechanismus weist ein Paar von endlosen Ketten 11 auf, die um entsprechende Kettenräder umlaufen und durch einen Motor 14 angetrieben werden und an denen in regelmäßigen Abständen Transportklinken 12 befestigt sind. Jede Transportklinke 12 kann, wie in Fig. 2 dargestellt, mit einem am Laufwagen 1 angeordneten Mitnehmer 13 zusammenwirken. Vorzugsweise ist der Mitnehmer 13 mit einer am Laufwagen 1 beschränkt schwenkbar gelagerten Sperrklinke 7 verbunden, mit der der Laufwagen mit dem ihm in Öffnungsrichtung nachfolgenden Laufwagen verriegelt werden kann. Beim Eingriff einer Transportklinke 12 in den Mitnehmer 13 wird zuerst die Sperrklinke 7 hochgeschwenkt und dadurch die Verriegelung mit dem nächsten Laufwagen gelöst, und erst dann wird die Zugkraft Z der Transportklinke 12 auf den Laufwagen 1 übertragen und dieser zusammen mit der Filterplatte 3 in Fig. 2 nach rechts beschleunigt.

Dieser am Mitnehmer 13, und damit in einer Höhe l₁ über den Schienen 8, 9 angreifenden Zugkraft Z wirkt eine an der Filterplatte eingreifende Gegenkraft H entgegen, die teils durch die Massenträgheit der Filterplatte 3 und teils durch ihre Haftung am Filterkuchen verursacht wird. Die beiden Kräfte Z und H erzeugen ein Drehmoment um die Achse der in Bewegungsrichtung vorderen Rolle 4, welches die hintere Rolle 5 von ihrer Schiene 9 abzuheben sucht. Wenn die Rolle 5 ihre Führung an der Schiene 9 verloren hat, verursacht die Zugkraft Z, die gemäß Fig. 3 im seitlichen Abstand l₂ von der Schiene 8 angreift, ein Drehmoment um eine durch die vordere Rolle 4 verlaufende vertikale Achse, durch welches die nachlaufende Rolle 5 gegenüber der Schiene 9 nach außen (d.h. in Fig.3 nach unten) verschoben wird. Wenn die Haftungs- und Beschleunigungskraft H aufgehört hat und sich die nachlaufende Rolle 5 wieder absenkt, trifft sie nicht mehr ordnungsgemäß auf die Schiene 9 auf, sondern befindet sich seitlich zu dieser versetzt.

Um dies zu verhindern, ist neben der Rolle 5 und parallel zu der Schiene 9 eine Führungsleiste 15 vorgesehen, die der Stirnfläche der Rolle 5 berührend oder mit geringem Spalt gegenübersteht. Der vertikale Abstand der Oberkante dieser Führungsleiste 15 von der Schiene 9 ist so groß, daß die Rolle 5 auch dann, wenn sie aufgrund der Haftungskraft H von der Schiene 9 nach oben abgehoben wird, ihre seitliche Führung an der Führungsleiste nicht verliert und daher nicht relativ zur Schiene 9 seitlich nach außen verschoben werden kann. Die Führungsleiste 15 besteht vorzugsweise aus einem reibungs- und verschleißarmen Material, wie z.B. Polyäthylen oder einem anderen Kunststoff.

Gemäß einer anderen in Fig. 3 gestrichelt angedeuteten Ausführungsform der Erfindung ist die Rolle 5 an der Innenseite der Schiene 9 mit einem Spurkranz 16 versehen, der so weit über die Umfangsfläche der Rolle übersteht, daß die Rolle 5 auch bei den durch die Haftungskraft H verursachten Abhebebewegungen von der Schiene 9 ihre seitliche Führung an der Innenseite der Schiene 9 nicht verliert. Dieser vergrößerte Spurkranz 16 erfüllt somit die gleiche Funktion wie die Führungsleiste 15.

## Patentansprüche

1. Aufhänge- und Führungsvorrichtung für die Filterplatten einer Filterpresse, mit zwei parallelen Schienen (8, 9) und auf diesen auf Rollen verfahrbaren Laufwagen (1), an denen die Filterplatten (3) aufgehängt sind, wobei jeder Laufwagen (1) je eine auf jeder Schiene (8, 9) laufende Rolle (4, 5) sowie mittig zwischen diesen ein Eingriffselement (13) für den Eingriff einer die Laufwagen in Öffnungsrichtung der Filterpresse entlang der Schienen bewegenden Transporteinrichtung (12) aufweist und wobei die beiden Rollen (4, 5) jedes Laufwagens (1) in Längsrichtung der Schienen gegeneinander versetzt angeordnet sind,
**dadurch gekennzeichnet**,
daß neben der Schiene (9), auf der die in Transportrichtung nachlaufenden Rollen (5) der Laufwagen (1) laufen, eine der äußeren Stirnfläche der Rolle (5) berührend oder mit geringem Spalt gegenüberstehende Führungsleiste (15) vorgesehen ist, deren Höhe größer ist als die durch Plattenhaftung (H) verursachten Abhebebewegungen der Rolle (5) nach oben.

2. Vorrichtung nach Anspruch 1 **dadurch gekennzeichnet**, daß die Führungsleiste (15) aus einem reibungsarmen Material, insbesondere Kunststoff besteht.

3. Aufhänge- und Führungsvorrichtung für die Filterplatten einer Filterpresse, mit zwei parallelen Schienen (8, 9) und auf diesen auf Rollen verfahrbaren Laufwagen (1), an denen die Filterplatten (3) aufgehängt sind, wobei jeder Laufwagen (1) je eine auf jeder Schiene (8, 9) laufende Rolle (4, 5) sowie mittig zwischen diesen ein Eingriffselement (13) für den Eingriff einer die Laufwagen in Öffnungsrichtung der Filterpresse entlang der Schienen bewegenden Transporteinrichtung (12) aufweist und wobei die beiden Rollen (4, 5) jedes Laufwagens (1) in Längsrichtung der Schienen gegeneinander versetzt angeordnet sind,
**dadurch gekennzeichnet**, daß die in Transportrichtung nachlaufende Rolle (5) an ihrer Innenseite einen Spurkranz (16) aufweist, dessen Höhe größer ist, als die durch Plattenhaftung (H) verursachten Abhebebewegungen der Rolle (5) nach oben.

## Claims

1. Suspension and guidance mechanism for the filter plates of a filter press, with two parallel rails (8, 9) and dollies (1) that can be run on rollers, dollies upon which are suspended filter plates (3), with each dolly (1) having one roller (4, 5) that runs on each rail (8, 9), and, between them, an engagement element (13) for engagement of a transport device (12) that moves the dollies along the rails in the direction toward the opening of the filter press, whereby the two rollers (4, 5) of each dolly (1) are staggered with respect to each other in the longitudinal direction of the rails,
characterized in
that next to the rail (9), on which run rollers (5) of dollies (1) that move in the direction of transport, there is a guide bar (15) that touches the outer front surface of roller (5) or that is opposite it with a small gap, its height being greater than the upward lifting motions of roller (5) caused by plate adhesion (H).

2. Mechanism according to Claim 1,
characterized in
that guide bar (15) consists of a low-friction material, especially plastic.

3. Suspension and guidance mechanism for the filter plates of a filter press, with two parallel rails (8, 9) and dollies (1) that can run on these rollers and on which are suspended filter plates (3), where each dolly (1) has one roller (4, 5) that runs on each rail (8, 9), and, between them, an engagement element (13) for the engagement of a transport device (12) that moves the dollies along the rails in the opening direction of the filter press, whereby the two rollers (4, 5) of each dolly (1) are staggered with respect to each other in the longitudinal direction of the rails,
characterized in
that roller (5) which follows in the transport direction has, on its inner side, a wheel flange (16) whose height is greater than the upward lifting movements of roller (5) caused by plate adhesion (H).

## Revendications

1. Méchanisme de suspension et de guidage pour les plaques filtrantes d'un filtre-presse, comprenant deux rails parallèles (8, 9) et des chariots (1) qui peuvent rouler avec des galets sur ces rails, les plaques filtrantes (3) étant suspendues par lesdits chariots, chaque chariot (1) ayant deux galets (4, 5) roulant sur l'un et sur l'autre rail (8, 9) et, centré entre ces galets, un élément de prise (13) pour venir en prise avec un dispositif de transport (12) qui déplace lesdits chariots le long lesdits rails dans le sens d'ouverture dudit filtre-presse, les deux galets (4, 5) de chaque chariot (1) étant disposés en quinquonce l'un par rapport a l'autre dans le sens longitudinal desdits rails,
**caractérisé**
en ce qu' à côté du rail (9) sur lequel roulent les galets (5) qui sont en arrière dans la direction de transport desdits chariots (1) il se trouve une glissière de guidage (15) qui touche la face extérieure du galet (5) ou se trouve opposé à celle-ci avec un espace étroit, la hauteur de cette glissière étant plus importante que les mouvements de levage vers le haut dudit galet (5) provoqués par l'adhésion (H) des plaques filtrantes.

2. Méchanisme selon la revendication 1,
**caractérisé** en ce que ladite glissière de guidage (15) est en materiau à basse friction, notamment une matière synthétique.

3. Méchanisme de suspension et de guidage pour les plaques filtrantes d'un filtre-presse, comprenant deux rails parallèles (8, 9) et des chariots (1) qui peuvent rouler avec des galets sur ces rails, les plaques filtrantes (3) étant suspendues par lesdits chariots, chaque chariot (1) ayant deux galets (4, 5) roulant sur l'un et sur l'autre rail (8, 9) et, centré entre ces galets, un élément de prise (13) pour venir en prise avec un dispositif de transport (12) qui déplace lesdits chariots le long lesdits rails dans le sens d'ouverture dudit filtre-presse, les deux galets (4, 5) de chaque chariot (1) étant disposés en quinquonce l'un par rapport a l'autre dans le sens longitudinal desdits rails,
**caractérisé**
en ce que le galet (5) arrière dans la direction de transport comprend, de son côté intérieur, un boudin (16) dont la hauteur est plus importante que les mouvements de levage vers le haut dudit galet (5) provoqués par l'adhésion (H) des plaques filtrantes.
